# EUROPEAN PATENT APPLICATION

(11) **EP 4 813 716 A1**
(43) Date of publication of application: **30.09.2026**
(21) Application number: 26164333.2
(22) Date of filing: 12.03.2026
(51) Int. Cl.: B60K 35/22

(54) **DISPLAY CONTROL APPARATUS, METHOD FOR CONTROLLING DISPLAY CONTROL APPARATUS, AND DISPLAY CONTROL PROGRAM**

(30) Priority: 26.03.2025 JP 2025051143
(71) Applicant: Toyota Jidosha Kabushiki Kaisha, Toyota-shi, Aichi-ken 471-8571 (JP)
(72) Inventor: SUGIMOTO, Tsuyoshi, Toyota-shi, 471-8571 (JP)
(74) Representative: J A Kemp LLP

(57) **Abstract**

A display control apparatus includes: a display operation unit mounted on a vehicle and configured to display information to an occupant of the vehicle and receive an operation by the occupant; a function control unit configured to control a predetermined function of the vehicle based on a detection result of a sensor mounted on the vehicle or the operation by the occupant; and a display control unit configured to control the display operation unit based on an operation state of the function, wherein the display control unit controls the display operation unit to display a function operation screen for changing the operation state of the function by the operation by the occupant when the operation state of the function changes not based on the operation by the occupant.

## Description

### TECHNICAL FIELD

The present disclosure relates to a display control apparatus, a method for controlling a display control apparatus, and a display control program.

### BACKGROUND

In the related art, it is known to perform a switching operation between an ON state and an OFF state by touching a display screen (software switch) of a multi-display mounted on a vehicle, and the multi-display is configured to display various switches for switching an operation state of a predetermined function (for example, Japanese Unexamined Patent Publication No. 2023-124880).

Here, when an operation state of a function automatically changes not based on an operation by an occupant, the operation state of the function may not be a state in accordance with an intention of the occupant.

Therefore, even in a configuration in which a software switch as in the above-described related art is used, it may be desired that the occupant quickly and easily perform an operation to change the operation state of the function.

### SUMMARY

A display control apparatus according to an aspect of the present disclosure includes: a display operation unit mounted on a vehicle and configured to display information to an occupant of the vehicle and receive an operation by the occupant; a function control unit configured to control a predetermined function of the vehicle based on a detection result of a sensor mounted on the vehicle or the operation by the occupant; and a display control unit configured to control the display operation unit based on an operation state of the function, in which the display control unit controls the display operation unit to display a function operation screen for changing the operation state of the function by the operation by the occupant when the operation state of the function changes not based on the operation by the occupant.

In the display control apparatus according to the aspect of the present disclosure, when the operation state of the function changes not based on the operation by the occupant, the display operation unit is controlled to display the function operation screen for changing the operation state of the function by the operation by the occupant. This eliminates an operation on the display operation unit to call up the function operation screen in order for the occupant to change the operation state of the function to a desired state. Therefore, for example, even if the operation state that has automatically changed not based on the operation by the occupant is not a state in accordance with the intention of the occupant, the occupant can quickly and easily perform an operation to change the operation state of the function.

In one example, the display control unit may control the display operation unit to display the function operation screen including an operation image for changing the operation state of the function by the operation by the occupant when the operation state of the function changes not based on the operation by the occupant while the vehicle is traveling. In this case, when the operation state of the function automatically changes not based on the operation by the occupant while the vehicle is traveling, the occupant can quickly and easily operate the operation image.

In one example, the function may be lighting control for turning on or turning off a lighting device including a headlight of the vehicle, the operation state may include an automatic-control-enabled state in which turning on or turning off of the lighting device is automatically changed according to a detection result of an illuminance sensor mounted on the vehicle, an automatic-control-disabled state in which turning on or turning off of the lighting device is not automatically changed according to the detection result of the illuminance sensor when there is an abnormality in the illuminance sensor, and a manual state in which turning on or turning off of the lighting device is changed by the operation by the occupant, the function control unit may switch the operation state of the lighting control from the automatic-control-enabled state to the automatic-control-disabled state when the abnormality occurs in the illuminance sensor, and the display control unit may control the display operation unit to display the function operation screen for switching the operation state of the lighting control to the manual state when the operation state of the lighting control switches from the automatic-control-enabled state to the automatic-control-disabled state. In this case, even if the abnormality occurs in the illuminance sensor and the operation state of the lighting control is automatically switched from the automatic-control-enabled state to the automatic-control-disabled state, the occupant can quickly and easily perform an operation to switch the operation state of the lighting control to the manual state.

In one example, the display control unit may be configured to display, on the display operation unit, a plurality of the function operation screens corresponding to a plurality of the functions of the vehicle respectively, and a function selection screen including a link for transitioning to each of the plurality of the function operation screens, the function selection screen being provided at a hierarchical level higher than the plurality of the function operation screens, and the display control unit may control the display operation unit to display the function operation screen corresponding to the function when the operation state of the function changes not based on the operation by the occupant. In this case, for example, even if the function selection screen is displayed on the display operation unit immediately before the operation state of the function automatically changes not based on the operation by the occupant, it becomes possible to automatically transition to the function operation screen of the function without performing a touch operation on the link in the function selection screen.

A method for controlling a display control apparatus according to another aspect of the present disclosure is a method for controlling a display control apparatus controlling a display operation unit mounted on a vehicle, displaying information to an occupant of the vehicle, and receiving an operation by the occupant, the method including: a function control step of causing the display control apparatus to control a predetermined function of the vehicle based on a detection result of a sensor mounted on the vehicle or the operation by the occupant; and a display control step of causing the display control apparatus to control the display operation unit based on an operation state of the function, in which, in the display control step, the display operation unit is controlled to display a function operation screen for changing the operation state of the function by the operation by the occupant when the operation state of the function changes not based on the operation by the occupant in the function control step.

In the method for controlling a display control apparatus according to another aspect of the present disclosure, when the operation state of the function changes not based on the operation by the occupant, the display operation unit is controlled to display the function operation screen for changing the operation state of the function by the operation by the occupant. This eliminates an operation on the display operation unit to call up the function operation screen in order for the occupant to change the operation state of the function to a desired state. Therefore, for example, even if the operation state that has automatically changed not based on the operation by the occupant is not a state in accordance with the intention of the occupant, the occupant can quickly and easily perform an operation to change the operation state of the function.

A display control program according to still another aspect of the present disclosure is a display control program causing a computer to function as a display control apparatus controlling a display operation unit that is mounted on a vehicle, the display operation unit being configured to display information to an occupant of the vehicle and receive an operation by the occupant, the display control program causing the computer to function as: a function control unit configured to control a predetermined function of the vehicle based on a detection result of a sensor mounted on the vehicle or the operation by the occupant; and a display control unit configured to control the display operation unit based on an operation state of the function, in which the display control unit controls the display operation unit to display a function operation screen for changing the operation state of the function by the operation by the occupant when the operation state of the function changes not based on the operation by the occupant.

In the display control program according to still another aspect of the present disclosure, when the operation state of the function changes not based on the operation by the occupant, the display operation unit is controlled to display the function operation screen for changing the operation state of the function by the operation by the occupant. This eliminates an operation on the display operation unit to call up the function operation screen in order for the occupant to change the operation state of the function to a desired state. Therefore, for example, even if the operation state that has automatically changed not based on the operation by the occupant is not a state in accordance with the intention of the occupant, the occupant can quickly and easily perform an operation to change the operation state of the function.

According to various aspects of the present disclosure, for example, even if the operation state that has automatically changed not based on the operation by the occupant is not a state in accordance with the intention of the occupant, the occupant can quickly and easily perform an operation to change the operation state of the function.

### BRIEF DESCRIPTION OF THE DRAWINGS

FIG. 1 is a block diagram illustrating a configuration of a display control apparatus according to an example.
FIG. 2 is a schematic diagram illustrating an example of function selection screen.
FIG. 3 is a schematic diagram illustrating an example of function operation screen corresponding to lighting control.
FIG. 4 is a schematic diagram illustrating an example of function operation screen corresponding to wiper control.
FIG. 5 is an example flowchart illustrating function control processing by an ECU of FIG. 1.
FIG. 6 is an example flowchart illustrating display control processing by the ECU of FIG. 1.
FIG. 7 is a flowchart illustrating a modified example of the display control processing of FIG. 6.

### DETAILED DESCRIPTION

Hereinafter, examples of the present disclosure will be described with reference to the drawings.

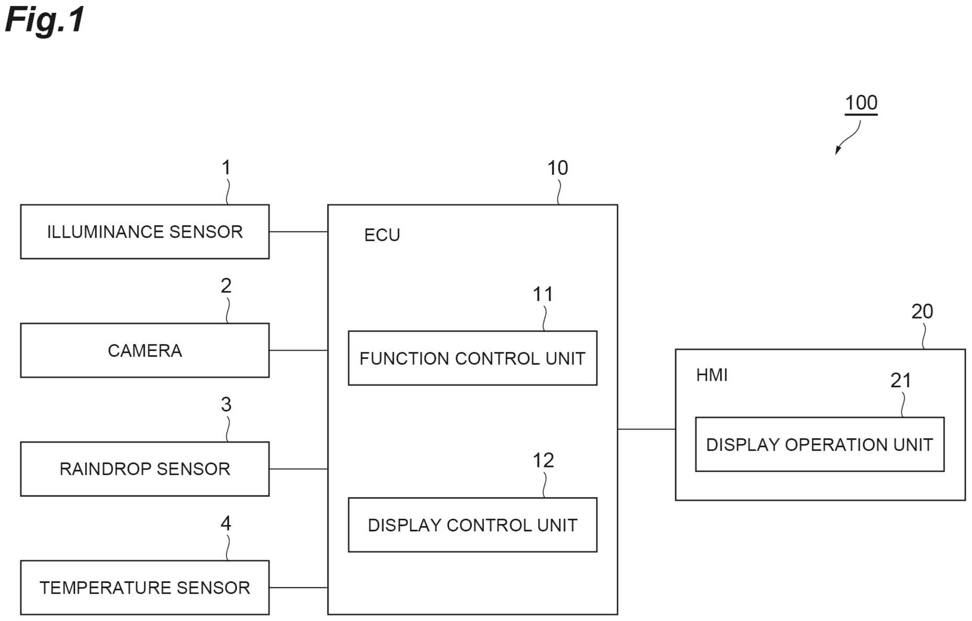

FIG. 1 is a block diagram illustrating a configuration of a display control apparatus according to an example. A display control apparatus 100 is mounted on a vehicle and is an apparatus for controlling a display operation unit of the vehicle. The vehicle here has a predetermined function controlled based on a detection result of a sensor mounted on the vehicle or an operation by an occupant. The predetermined function is a function whose operation state can automatically change based on the detection result of the sensor mounted on the vehicle. The predetermined function is, for example, an auto-light function (lighting control), an auto-high beam function, an auto-wiper function, an auto-seat function, an auto-air conditioner function, or the like. The predetermined function may be a part of the above functions or may include functions other than the above functions. Details of the predetermined function and the operation state will be described later.

As shown in FIG. 1, the display control apparatus 100 includes an Electronic Control Unit (ECU) 10. The ECU 10 is an electronic control unit including a Central Processing Unit (CPU) (processor), a storage unit, and an interface. The storage unit includes, for example, a Read Only Memory (ROM), a Random Access Memory (RAM), an Electrically Erasable Programmable Read-Only Memory (EEPROM), and the like. In the ECU 10, for example, various functions are realized by executing a program stored in the storage unit by the CPU. The ECU 10 may be formed of a plurality of electronic units.

The display control apparatus 100 includes, as a configuration connected to the ECU 10, an illuminance sensor 1 (sensor mounted on the vehicle), a camera 2 (sensor mounted on the vehicle), a raindrop sensor 3 (sensor mounted on the vehicle), a temperature sensor 4 (sensor mounted on the vehicle), and an HMI 20.

The illuminance sensor 1 is a detection device that detects illuminance around the vehicle. The illuminance around the vehicle is illuminance used for automatically turning on or turning off a lighting device of the vehicle. The illuminance sensor 1 is disposed, for example, on a dashboard below a windshield in a front area of a vehicle interior. A location where the illuminance sensor 1 is disposed is not limited to the front of the vehicle interior. The illuminance sensor 1 may be disposed on a side of the vehicle interior, at a rear of the vehicle interior, or outside the vehicle. The illuminance sensor 1 may have a known configuration using a light detection element such as a photodiode or a phototransistor. The illuminance sensor 1 transmits a detection signal related to illuminance to the ECU 10.

The camera 2 is an imaging device that captures an image of at least one of a surrounding environment of the vehicle and an occupant in the vehicle. The camera 2 may include, for example, an external camera provided on a back surface of an inner mirror (rear-view mirror) on a back side of the windshield of the vehicle to capture an image in front of the vehicle. The camera 2 may include, for example, an internal camera provided on a center cluster of the vehicle to capture an image of the occupant seated in a seat of the vehicle. The camera 2 may transmit, to the ECU 10, a captured image related to a situation in front of the vehicle and the occupant seated in the seat.

The raindrop sensor 3 is a detection device that detects raindrops adhering to glass of the vehicle. The raindrop sensor 3 is provided, for example, on an inner side of the windshield. The raindrop sensor 3 is configured to detect presence or an adhesion amount of raindrops. The raindrop sensor 3 may have a known configuration such as an optical type or a capacitive type. The raindrop sensor 3 transmits a detection result related to the presence or the adhesion amount of raindrops to the ECU 10.

The temperature sensor 4 is a detection device that detects temperatures inside and outside the vehicle. The temperature sensor 4 may have a known configuration used for controlling an air conditioner. The temperature sensor 4 transmits a detection result related to the detected temperatures to the ECU 10.

The HMI 20 is an interface for inputting and outputting information between the ECU 10 and the occupant. The HMI 20 includes, for example, a display operation unit 21 provided in a vehicle compartment, a speaker, and the like. That is, the display operation unit 21 is mounted on the vehicle. The HMI 20 performs image output of the display operation unit 21 and audio output from the speaker according to a control signal from the ECU 10. The display operation unit 21 is configured as, for example, a touch panel. The display operation unit 21 may be a center display or a display for navigation.

The display operation unit 21 displays information to the occupant of the vehicle and receives an operation by the occupant. The display operation unit 21 is configured to display a function selection screen and a plurality of function operation screens. The function selection screen is a screen provided at a hierarchical level higher than the plurality of function operation screens. The function selection screen includes a link for transitioning from the function selection screen to each of the plurality of function operation screens by an operation by the occupant. The function operation screen is a screen provided so as to correspond to each of the predetermined functions of the vehicle. The function operation screen includes an operation image for changing the operation state of the function by the operation by the occupant. The display operation unit 21 receives an operation of selecting the operation image by the occupant. The operation of selecting the operation image is, for example, a touch operation on the operation image which is a software switch displayed on the display operation unit 21.

The ECU 10 includes a function control unit 11 and a display control unit 12 as functional components.

The function control unit 11 controls the predetermined function of the vehicle based on the detection result of the sensor mounted on the vehicle or the operation by the occupant. The function control unit 11 controls the predetermined function according to, for example, the detection result received from at least one of the illuminance sensor 1, the camera 2, the raindrop sensor 3, and the temperature sensor 4, or the operation by the occupant.

The predetermined function and the operation state will be described. The auto-light function is a function of automatically turning on or turning off the lighting device including a headlight according to illuminance around the vehicle. The auto-high beam function is a function of automatically switching light distribution (high beam or low beam) of the headlight according to the situation in front of the vehicle. The auto-high beam function here may mean an adaptive high beam function capable of changing light distribution in the high beam as well as switching between the high beam and the low beam.

The auto-wiper function is a function of automatically operating or stopping a windshield wiper according to an adhesion state of raindrops to the windshield of the vehicle. The operation or stop of the wiper may include a change in speed of the wiper. The auto-seat function is a function of automatically changing settings such as a position and a backrest angle of the seat according to the occupant seated in the seat of the vehicle. The auto-air conditioner function is a function of automatically changing a set temperature and an air volume of an air conditioner device in the vehicle according to illuminance around the vehicle and temperatures inside and outside the vehicle.

The operation state of the predetermined function includes an automatic-control-enabled state in which operation content of the function can be automatically changed based on the detection result of the sensor mounted on the vehicle, and a manual state in which the operation content of the function is controlled based on the operation by the occupant. The automatic-control-enabled state and the manual state are switched by an operation on the display operation unit by the occupant.

For example, when the predetermined function is the auto-light function, the automatic-control-enabled state is an operation state in which turning on or turning off of the lighting device including the headlight is automatically changed according to the detection result of the illuminance sensor 1 mounted on the vehicle. When the predetermined function is the auto-light function, the manual state is an operation state in which turning on or turning off of the lighting device including the headlight is changed by the operation on the display operation unit by the occupant.

For example, when the predetermined function is the auto-high beam function, the automatic-control-enabled state is an operation state in which the light distribution of the headlight is automatically changed according to the situation in front of the vehicle recognized using the camera 2. When the predetermined function is the auto-high beam function, the manual state is an operation state in which the light distribution of the headlight is changed by the operation on the display operation unit by the occupant.

For example, when the predetermined function is the auto-wiper function, the automatic-control-enabled state is an operation state in which the windshield wiper is automatically operated or stopped according to the adhesion state of raindrops to the windshield of the vehicle recognized using the raindrop sensor 3. When the predetermined function is the auto-wiper function, the manual state is an operation state in which the windshield wiper is operated or stopped by the operation on the display operation unit by the occupant.

For example, when the predetermined function is the auto-seat function, the automatic-control-enabled state is an operation state in which settings such as the position and the backrest angle of the seat are automatically changed according to the occupant seated in the seat of the vehicle and recognized using the camera 2. When the predetermined function is the auto-seat function, the manual state is an operation state in which settings such as the position and the backrest angle of the seat are changed by the operation on the display operation unit by the occupant.

For example, when the predetermined function is the auto-air conditioner function, the automatic-control-enabled state is an operation state in which the set temperature and the air volume of the air conditioner device in the vehicle are automatically changed according to illuminance around the vehicle and temperatures inside and outside the vehicle recognized using the illuminance sensor 1 and the temperature sensor 4. When the predetermined function is the auto-air conditioner function, the manual state is an operation state in which the set temperature and the air volume of the air conditioner device in the vehicle are changed by the operation on the display operation unit by the occupant.

Here, the vehicle may not include a physical switch (for example, a dimmer switch or a wiper switch) for switching between the automatic-control-enabled state and the manual state. That is, the predetermined function may be realized by various known controls except that the operation by the occupant in the manual state is an operation on a software switch of the display operation unit. Examples of various known controls include processing itself for performing the predetermined function.

The operation state of the predetermined function may include an automatic-control-disabled state in which the operation content of the function is not automatically changed according to the detection result of the sensor mounted on the vehicle when there is an abnormality in the sensor mounted on the vehicle.

When the predetermined function is the auto-light function, the automatic-control-disabled state is an operation state in which turning on or turning off of the lighting device is not automatically changed according to the detection result of the illuminance sensor 1 when there is an abnormality in the illuminance sensor 1. When the abnormality occurs in the illuminance sensor 1 while the operation state of the auto-light function is the automatic-control-enabled state, the function control unit 11 switches the operation state of the auto-light function from the automatic-control-enabled state to the automatic-control-disabled state.

When the predetermined function is the auto-high beam function, the automatic-control-disabled state is an operation state in which the light distribution of the headlight is not automatically changed according to the captured image of the camera 2 when there is an abnormality in the camera 2 itself or when the captured image of the camera 2 is unclear and the situation in front of the vehicle is unable to be recognized. When the abnormality occurs in the camera 2 or when the captured image of the camera 2 is unclear and the situation in front of the vehicle is unable to be recognized while the operation state of the auto-high beam function is the automatic-control-enabled state, the function control unit 11 switches the operation state of the auto-high beam function from the automatic-control-enabled state to the automatic-control-disabled state.

When the predetermined function is the auto-wiper function, the automatic-control-disabled state is an operation state in which the operation or stop of the windshield wiper is not automatically changed according to the detection result of the raindrop sensor 3 when there is an abnormality in the raindrop sensor 3. When the abnormality occurs in the raindrop sensor 3 while the operation state of the auto-wiper function is the automatic-control-enabled state, the function control unit 11 switches the operation state of the auto-wiper function from the automatic-control-enabled state to the automatic-control-disabled state.

When the predetermined function is the auto-seat function, the automatic-control-disabled state is an operation state in which settings such as the position and the backrest angle of the seat are not automatically changed according to the captured image of the camera 2 when there is an abnormality in the camera 2 itself or when the captured image of the camera 2 is unclear and the occupant seated in the seat of the vehicle is unable to be recognized. When the abnormality occurs in the camera 2 or when the captured image of the camera 2 is unclear and the occupant seated in the seat of the vehicle is unable to be recognized while the operation state of the auto-seat function is the automatic-control-enabled state, the function control unit 11 switches the operation state of the auto-seat function from the automatic-control-enabled state to the automatic-control-disabled state.

When the predetermined function is the auto-air conditioner function, the automatic-control-disabled state is an operation state in which the set temperature and the air volume of the air conditioner device in the vehicle are not automatically changed according to the detection results of the illuminance sensor 1 and the temperature sensor 4 when there is an abnormality in the illuminance sensor 1 or the temperature sensor 4. When there is an abnormality in the illuminance sensor 1 or the temperature sensor 4 while the operation state of the auto-air conditioner function is the automatic-control-enabled state, the function control unit 11 switches the operation state of the auto-air conditioner function from the automatic-control-enabled state to the automatic-control-disabled state.

The display control unit 12 controls the display operation unit 21 based on the operation state of the predetermined function. The display control unit 12 controls display content displayed on a screen of the display operation unit 21 based on a control result of the predetermined function by the function control unit 11.

The display control unit 12 controls the display operation unit 21 to display the function operation screen when the operation state of the function changes not based on the operation by the occupant. The function operation screen is an operation screen for changing the operation state of the function by the operation by the occupant for the function whose operation state has changed not based on the operation by the occupant.

As an example, the display control unit 12 controls the display operation unit 21 to display the function operation screen including the operation image when the operation state of the function changes not based on the operation by the occupant while the vehicle is traveling. The operation image refers to an image of a software switch for changing the operation state of the function by the operation of the occupant, for the function whose operation state has changed not based on the operation by the occupant. Note that, in the condition "when the operation state of the function changes not based on the operation by the occupant while the vehicle is traveling", "the vehicle is traveling" may be omitted.

The display control unit 12 causes the display operation unit 21 to display the function selection screen as a screen of a highest hierarchical level (top screen) for performing settings related to the predetermined function. The highest hierarchical level means being located at a hierarchical level higher than any of the plurality of function operation screens in a hierarchical structure of a plurality of images displayed on the display operation unit 21. The plurality of function operation screens are images displayed on the display operation unit 21 for performing setting operations related to a plurality of predetermined functions. The function selection screen is an image displayed on the display operation unit 21 for selecting a target function on which a setting operation is performed from among the plurality of predetermined functions.

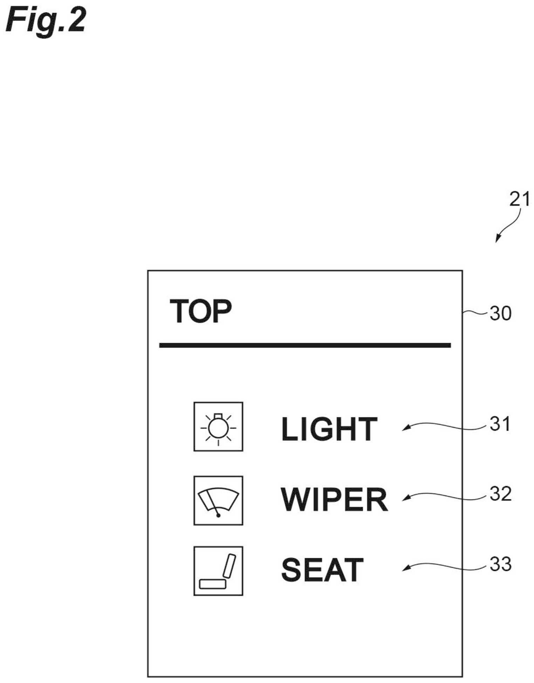

FIG. 2 is a schematic diagram illustrating an example of function selection screen. As shown in FIG. 2, a function selection screen 30 is an example of a screen displayed on the display operation unit 21. The function selection screen 30 includes links for transitioning to a plurality of function operation screens 40 and 50. Specifically, in the example of FIG. 2, the function selection screen 30 displays a function link image 31 to the function operation screen 40 related to the auto-light function, a function link image 32 to the function operation screen 50 related to the auto-wiper function, and a function link image 33 to a function operation screen related to the auto-seat function.

The display operation unit 21 displays the corresponding function operation screen 40 when the occupant performs a touch operation on the function link image 31. The display operation unit 21 displays the corresponding function operation screen 50 when the occupant performs a touch operation on the function link image 32. The display operation unit 21 displays the function operation screen related to the auto-seat function when the occupant performs a touch operation on the function link image 33.

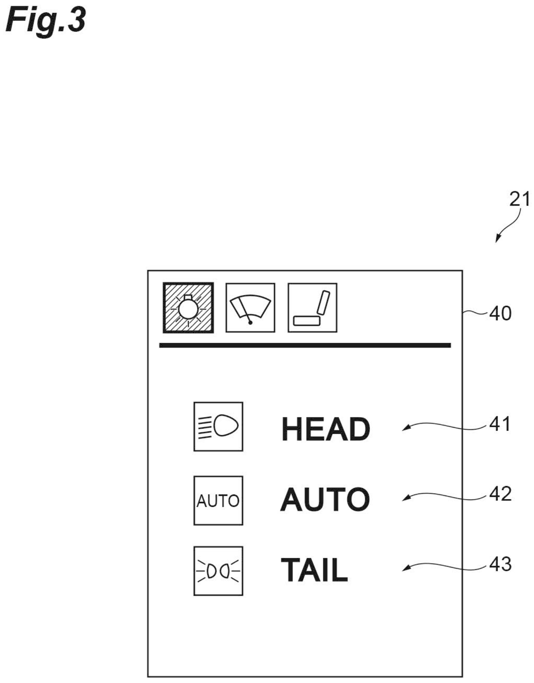

FIG. 3 is a schematic diagram illustrating an example of function operation screen corresponding to lighting control. The function operation screen 40 is an example of a screen for performing setting operations related to control of the lighting device, including the auto-light function (lighting control) and the auto-high beam function. The function operation screen 40 includes a manual headlight operation image 41, an automatic headlight operation image 42, and a manual position light operation image 43.

The manual headlight operation image 41 is an operation image for setting the auto-light function and the auto-high beam function to the manual state. For example, when the operation state of either the auto-light function or the auto-high beam function is the automatic-control-enabled state, the operation states of the auto-light function and the auto-high beam function change to the manual state by the occupant performing a touch operation on the manual headlight operation image 41. For example, turning on or turning off of the headlight is switched each time the occupant performs a touch operation on the manual headlight operation image 41. That is, the function operation screen 40 is a function operation screen for changing the operation states of the auto-light function and the auto-high beam function by the operation by the occupant.

The automatic headlight operation image 42 is an operation image for setting the auto-light function and the auto-high beam function to the automatic-control-enabled state. When the operation states of the auto-light function and the auto-high beam function are the manual state in a case where there is no abnormality in the illuminance sensor 1 and the camera 2, the operation states of the auto-light function and the auto-high beam function change to the automatic-control-enabled state by the occupant performing a touch operation on the automatic headlight operation image 42.

The manual position light operation image 43 is an operation image for setting the auto-light function and the auto-high beam function to the manual state. For example, when the operation state of the auto-light function is the automatic-control-enabled state, the operation states of the auto-light function and the auto-high beam function change to the manual state and the headlight turns off in response to the occupant performing a touch operation on the manual position light operation image 43. Alternatively, when the operation state of the auto-light function is the automatic-control-enabled state, the operation states of the auto-light function and the auto-high beam function change to the manual state and the headlight enters a daytime running light state in response to the occupant performing a touch operation on the manual position light operation image 43. Each time the occupant performs a touch operation on the manual position light operation image 43, turning on or turning off of clearance lamps on sides and a rear of the vehicle may be switched while the headlight is off or in the daytime running light state. Also in this case, the function operation screen 40 is a function operation screen for changing the operation states of the auto-light function and the auto-high beam function by the operation by the occupant.

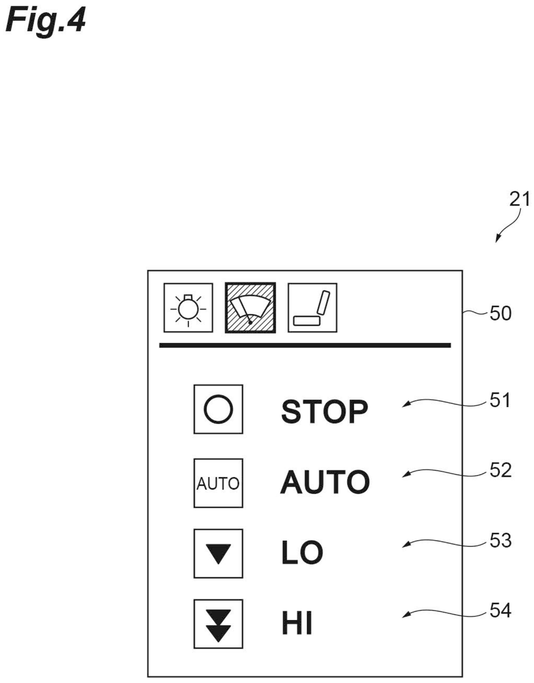

FIG. 4 is a schematic diagram illustrating an example of function operation screen corresponding to wiper control. The function operation screen 50 is an example of a screen for performing setting operations related to the auto-wiper function. The function operation screen 50 includes a manual wiper stop operation image 51, an automatic wiper operation image 52, a manual low-speed wiper operation image 53, and a manual high-speed wiper operation image 54.

The manual wiper stop operation image 51 is an operation image for setting the auto-wiper function to the manual state. For example, when the operation state of the auto-wiper function is the automatic-control-enabled state, the operation state of the auto-wiper function changes to the manual state and the wiper is stopped by the occupant performing a touch operation on the manual wiper stop operation image 51. That is, the function operation screen 50 is a function operation screen for changing the operation state of the auto-wiper function by the operation by the occupant.

The automatic wiper operation image 52 is an operation image for setting the auto-wiper function to the automatic-control-enabled state. When the operation state of the auto-wiper function is the manual state in a case where there is no abnormality in the raindrop sensor 3, the operation state of the auto-wiper function changes to the automatic-control-enabled state by the occupant performing a touch operation on the automatic wiper operation image 52.

The manual low-speed wiper operation image 53 is an operation image for setting the auto-wiper function to the manual state. For example, when the operation state of the auto-wiper function is the automatic-control-enabled state, the operation state of the auto-wiper function changes to the manual state and the wiper is operated in a LO mode by the occupant performing a touch operation on the manual low-speed wiper operation image 53.

The manual high-speed wiper operation image 54 is an operation image for setting the auto-wiper function to the manual state. For example, when the operation state of the auto-wiper function is the automatic-control-enabled state, the operation state of the auto-wiper function changes to the manual state and the wiper is operated in a HI mode by the occupant performing a touch operation on the manual high-speed wiper operation image 54.

The LO mode is a mode in which the wiper is operated at a low speed among preset multiple stages of wiper operation speeds. The HI mode is a mode in which the wiper is operated at a high speed among preset multiple stages of wiper operation speeds. Also in these cases, the function operation screen 50 is a function operation screen for changing the operation state of the auto-wiper function by the operation by the occupant.

In the example of FIG. 2, the function operation screen related to the auto-seat function, to which the screen transitions from the function selection screen 30 by the occupant performing a touch operation on the function link image 33, can also be configured similarly to the function operation screen 40 and the function operation screen 50. In this case, the function operation screen related to the auto-seat function is a function operation screen for changing the operation state of the auto-seat function by the operation by the occupant. Similarly, the function selection screen may include a function link image for transitioning to a function operation screen related to the auto-air conditioner function in response to a touch operation by the occupant. The function operation screen related to the auto-air conditioner function in this case is a function operation screen for changing the operation state of the auto-air conditioner function by the operation by the occupant.

Here, it is assumed that the operation state of the predetermined function changes from the automatic-control-enabled state to the automatic-control-disabled state due to occurrence of an abnormality from a state where there was no abnormality in the sensor mounted on the vehicle. In this case, the operation content of the predetermined function obtained in the automatic-control-enabled state may be lost due to the change to the automatic-control-disabled state. For example, when the predetermined function is the auto-light function, a situation is conceivable in which the lighting device turns off due to the change to the automatic-control-disabled state from a state where the lighting device was on in the automatic-control-enabled state while the vehicle was traveling at night or in a tunnel. In such a situation, by quickly switching to the manual state, the lighting device can be turned on early by the operation by the occupant. However, if a series of operations of displaying the function selection screen 30 and then performing a touch operation on the function link image 31 to call up the function operation screen 40 is required for the occupant, effort and time for shifting to the manual state tend to increase.

Therefore, the display control unit 12 controls the display operation unit 21 to display the function operation screen corresponding to the function when the operation state of the function changes not based on the operation by the occupant. "When the operation state of the function changes not based on the operation by the occupant" includes a case where the operation state changes not based on the operation by the occupant so as to change from one of the automatic-control-enabled state, the manual state, and the automatic-control-disabled state to any other one. For example, the operation state may automatically change from the automatic-control-enabled state to the automatic-control-disabled state due to a change from a state where there is no abnormality in the sensor mounted on the vehicle to a state where there is an abnormality.

For example, the display control unit 12 controls the display operation unit 21 to display the function operation screen 40 for switching the operation state of the auto-light function to the manual state when the operation state of the auto-light function switches from the automatic-control-enabled state to the automatic-control-disabled state. That is, a screen different from the function operation screen 40 of the auto-light function is displayed on the display operation unit 21 when the operation state of the auto-light function switches from the automatic-control-enabled state to the automatic-control-disabled state not based on the operation by the occupant. Accordingly, even if a screen other than the function operation screen 40 is displayed on the display operation unit 21 immediately before the operation state of the auto-light function switches from the automatic-control-enabled state to the automatic-control-disabled state, the function operation screen 40 is displayed on the display operation unit 21 after switching to the automatic-control-disabled state. This allows the occupant to perform a touch operation on the manual headlight operation image 41 without performing an operation to call up the function operation screen 40. As a result, the operation state can be quickly switched to the manual state, and the lighting device can be turned on early. Examples of the screen other than the function operation screen 40 include a navigation screen or the function selection screen 30.

Similarly, for example, the display control unit 12 may control the display operation unit 21 to display the function operation screen 40 for switching the operation state of the auto-high beam function to the manual state when the operation state of the auto-high beam function switches from the automatic-control-enabled state to the automatic-control-disabled state. Accordingly, even if a screen other than the function operation screen 40 is displayed on the display operation unit 21 immediately before the operation state of the the auto-high beam function switches from the automatic-control-enabled state to the automatic-control-disabled state, the function operation screen 40 is displayed on the display operation unit 21 after switching to the automatic-control-disabled state. The display control unit 12 may control the display operation unit 21 to display the function operation screen 50 for switching the operation state of the auto-wiper function to the manual state when the operation state of the auto-wiper function switches from the automatic-control-enabled state to the automatic-control-disabled state. Accordingly, even if a screen other than the function operation screen 50 is displayed on the display operation unit 21 immediately before the operation state of the auto-wiper function switches from the automatic-control-enabled state to the automatic-control-disabled state, the function operation screen 50 is displayed on the display operation unit 21 after switching to the automatic-control-disabled state. The display control unit 12 may control the display operation unit 21 to display the function operation screen for switching the operation state of the auto-seat function to the manual state when the operation state of the auto-seat function switches from the automatic-control-enabled state to the automatic-control-disabled state. Accordingly, even if a screen other than the function operation screen for switching the operation state of the auto-seat function to the manual state is displayed on the display operation unit 21 immediately before the operation state of the auto-seat function switches from the automatic-control-enabled state to the automatic-control-disabled state, the function operation screen for switching the operation state of the auto-seat function to the manual state is displayed on the display operation unit 21 after switching to the automatic-control-disabled state. The display control unit 12 may control the display operation unit 21 to display the function operation screen for switching the operation state of the auto-air conditioner function to the manual state when the operation state of the auto-air conditioner function switches from the automatic-control-enabled state to the automatic-control-disabled state. Accordingly, even if a screen other than the function operation screen for switching the operation state of the auto-air conditioner function to the manual state is displayed on the display operation unit 21 immediately before the operation state of the auto-air conditioner function switches from the automatic-control-enabled state to the automatic-control-disabled state, the function operation screen for switching the operation state of the auto-air conditioner function to the manual state is displayed on the display operation unit 21 after switching to the automatic-control-disabled state.

Note that "when the operation state of the function changes not based on the operation by the occupant" may include a case where the operation content of the function automatically changes according to a change in the detection result of the sensor mounted on the vehicle when there is no abnormality in the sensor mounted on the vehicle and the operation state of the function is the automatic-control-enabled state. The operation content of the function is "turning on or turning off of the lighting device" when the predetermined function is the auto-light function. For example, "when the operation state of the function changes not based on the operation by the occupant" includes a case where turning on or turning off of the lighting device is automatically switched according to a change in illuminance detected by the illuminance sensor 1 when there is no abnormality in the illuminance sensor 1 and the operation state is the automatic-control-enabled state. That is, the automatic-control-enabled state can also be said to be "a state in which the operation state of the function can change not based on the operation by the occupant".

For example, illuminance of light mainly from the front of the vehicle visually recognized by the occupant may differ from illuminance of light mainly from above the vehicle detected by the illuminance sensor 1. In this case, even in the automatic-control-enabled state, the operation content of the auto-light function may give a sense of discomfort to the occupant. Therefore, even such an automatic change in the operation content of the function can be treated as "when the operation state of the function changes not based on the operation by the occupant".

For example, the display control unit 12 may control the display operation unit 21 to display the function operation screen 40 for switching the operation state of the auto-light function to the manual state when the lighting device automatically switches from off to on according to a change in illuminance detected by the illuminance sensor 1 in a state where the operation state of the auto-light function is the automatic-control-enabled state. In this case, for example, the occupant visually recognizing light mainly from the front of the vehicle may feel that the illuminance is such that the headlight does not have to be turned on yet. Even in such a case, by performing a touch operation on the manual headlight operation image 41 or the manual position light operation image 43 without the occupant performing an operation to call up the function operation screen 40, the occupant can turn off the headlight that has turned on at a timing different from the occupant's own sensitivity. Similarly, even if the headlight automatically turns off when the occupant feels that the headlight is to be turned on, the occupant can turn on the headlight that has turned off at a timing different from the sensitivity of the occupant.

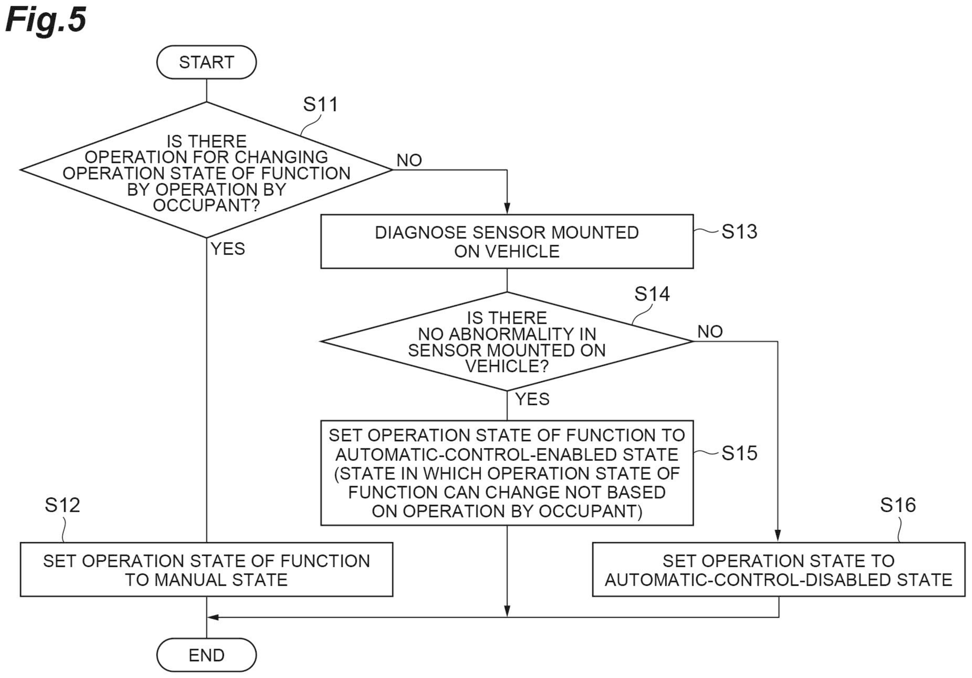

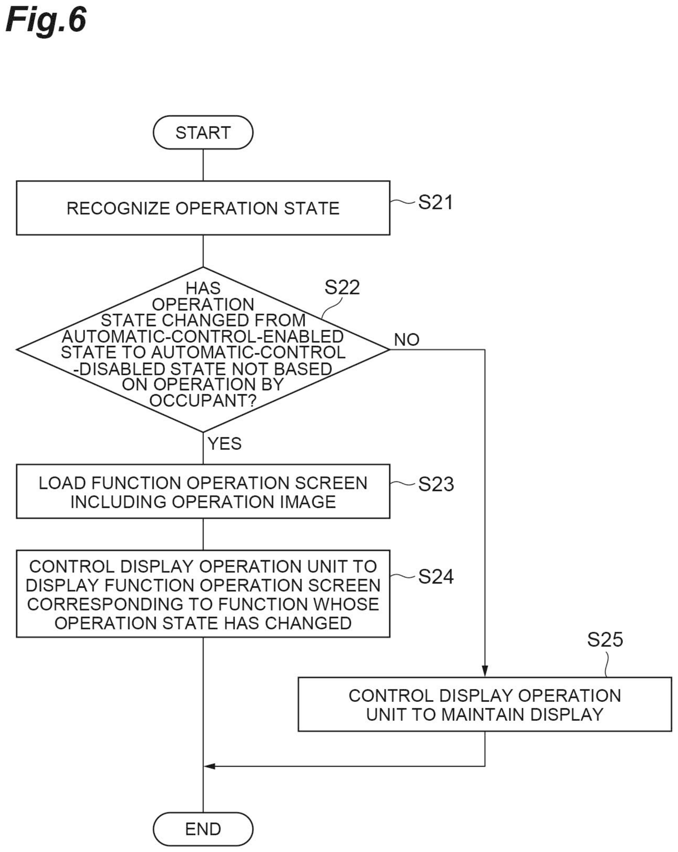

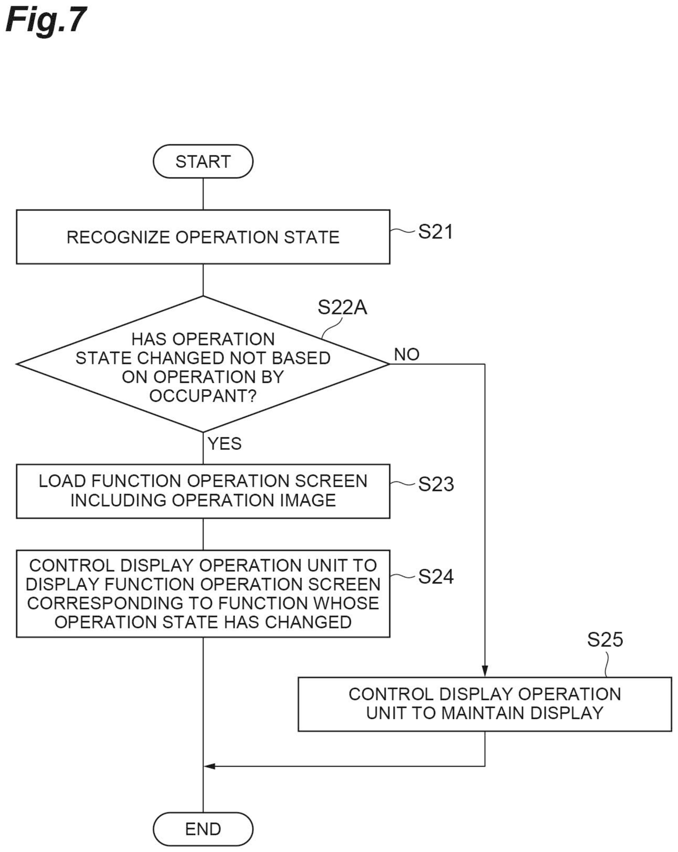

Next, processing of the ECU 10 in the display control apparatus 100 and the method for controlling the display control apparatus will be described with reference to the flowcharts of FIGS. 5 to 7. Processing of the flowchart of FIG. 5 is repeatedly executed, for example, at predetermined calculation intervals in a state where power of the ECU 10 of the vehicle is ON. Steps S11 to S16 in FIG. 5 correspond to a function control step, and steps S21 to S25 in FIG. 6 correspond to a display control step. In FIG. 7, steps S21, S22A, and S23 to S25 correspond to a display control step. For example, in a certain calculation cycle, processing of the flowchart of FIG. 6 or FIG. 7 is executed after the operation state of the function is determined by processing of the flowchart of FIG. 5. The processing of the flowchart of FIG. 5 and the processing of the flowchart of FIG. 6 or FIG. 7 may be executed in parallel. The processing of the flowcharts of FIGS. 5 to 7 may be executed for each predetermined function.

As shown in FIG. 5, the ECU 10 determines, by the function control unit 11, whether there is an operation for changing the operation state of the function by the operation by the occupant in step S11. The function control unit 11 determines that there is an operation for changing the operation state of the function by the operation by the occupant, for example, when there is an operation of touching the manual headlight operation image 41 or the manual position light operation image 43 on the function operation screen 40 (operation for setting to the manual state). The function control unit 11 determines that there is no operation for changing the operation state of the function by the operation by the occupant, for example, when there is an operation of touching the automatic headlight operation image 42 on the function operation screen 40 (operation for setting to the automatic-control-enabled state), or when there is no operation for setting to the manual state when the operation state of the function is already the automatic-control-enabled state.

When it is determined by the function control unit 11 that there is an operation for changing the operation state of the function by the operation by the occupant (step S11: YES), the ECU 10 proceeds to step S12. In step S12, the ECU 10 sets the operation state of the function to the manual state by the function control unit 11. Thereafter, the ECU 10 ends processing of FIG. 5.

On the other hand, when it is determined by the function control unit 11 that there is no operation for changing the operation state of the function by the operation by the occupant (step S11: NO), the ECU 10 proceeds to step S13. In step S13, the ECU 10 diagnoses the sensor mounted on the vehicle by the function control unit 11. The function control unit 11 can diagnose the sensor mounted on the vehicle by a known diagnosis method.

In step S14, the ECU 10 determines, by the function control unit 11, whether there is no abnormality in the sensor mounted on the vehicle. When it is determined by the function control unit 11 that there is no abnormality in the sensor mounted on the vehicle (step S14: YES), the ECU 10 proceeds to step S15. In step S15, the ECU 10 sets the operation state of the function to the automatic-control-enabled state (state in which the operation state of the function can change not based on the operation by the occupant) by the function control unit 11. Thereafter, the ECU 10 ends processing of FIG. 5.

On the other hand, when it is determined by the function control unit 11 that there is an abnormality in the sensor mounted on the vehicle (step S14: NO), the ECU 10 proceeds to step S16. In step S16, the ECU 10 sets the operation state to the automatic-control-disabled state by the function control unit 11. Thereafter, the ECU 10 ends processing of FIG. 5.

As shown in FIG. 6, the ECU 10 recognizes the operation state by the display control unit 12 in step S21. The display control unit 12 recognizes the operation state of the predetermined function based on the operation state of the function determined by the function control unit 11 by processing of FIG. 5. The display control unit 12 recognizes, for example, that the operation state of the auto-light function is the automatic-control-enabled state.

In step S22, the ECU 10 determines, by the display control unit 12, whether the operation state has changed from the automatic-control-enabled state to the automatic-control-disabled state not based on the operation by the occupant. For example, when an abnormality occurs in the sensor mounted on the vehicle which had no abnormality in processing of FIG. 5, the display control unit 12 determines that the operation state has changed from the automatic-control-enabled state to the automatic-control-disabled state not based on the operation by the occupant in response to the operation state of the function determined by the function control unit 11 changing from the automatic-control-enabled state to the automatic-control-disabled state. When a state where there is no abnormality in the sensor mounted on the vehicle continues in processing of FIG. 5, the display control unit 12 determines that the operation state has not changed from the automatic-control-enabled state to the automatic-control-disabled state not based on the operation by the occupant in response to the operation state of the function determined by the function control unit 11 continuing in the automatic-control-enabled state or the manual state. Alternatively, when a state where there is an abnormality in the sensor mounted on the vehicle continues in processing of FIG. 5, the display control unit 12 determines that the operation state has not changed from the automatic-control-enabled state to the automatic-control-disabled state not based on the operation by the occupant in response to the operation state of the function determined by the function control unit 11 continuing in the automatic-control-disabled state.

When it is determined by the display control unit 12 that the operation state has changed from the automatic-control-enabled state to the automatic-control-disabled state not based on the operation by the occupant (step S22: YES), the ECU 10 proceeds to step S23. In step S23, the ECU 10 loads the function operation screen including the operation image by the display control unit 12. The display control unit 12 loads, for example, the function operation screen 40 including the manual headlight operation image 41 and the manual position light operation image 43 as operation images. In step S24, the ECU 10 controls the display operation unit 21 by the display control unit 12 to display the function operation screen corresponding to the function whose operation state has changed. The display control unit 12 controls the display operation unit 21 to display, for example, the function operation screen 40 corresponding to the auto-light function whose operation state has changed. That is, the display control unit 12 controls the display operation unit 21 to display the function operation screen corresponding to a first function whose operation state has changed when a screen different from the function operation screen of the first function (for example, the auto-light function) whose operation state has changed not based on the operation by the occupant is displayed on the display operation unit 21. Thereafter, the ECU 10 ends processing of FIG. 6.

On the other hand, when it is determined by the display control unit 12 that the operation state has not changed from the automatic-control-enabled state to the automatic-control-disabled state not based on the operation by the occupant (step S22: NO), the ECU 10 proceeds to step S25. In step S25, the ECU 10 controls the display operation unit 21 by the display control unit 12 to maintain display. When a screen other than the function operation screen 40 such as the navigation screen or the function selection screen 30 is displayed, the display control unit 12 may control the display operation unit 21 to maintain the display. Thereafter, the ECU 10 ends processing of FIG. 6.

Incidentally, "the operation state has changed from the automatic-control-enabled state to the automatic-control-disabled state" in processing of S22 of the flowchart of FIG. 6 may be omitted. For example, as shown in FIG. 7, instead of step S22, as step S22A, the ECU 10 may determine, by the display control unit 12, whether the operation state has changed not based on the operation by the occupant. In step S22A, if the operation state has changed not based on the operation by the occupant so as to change from one of the automatic-control-enabled state, the manual state, and the automatic-control-disabled state to any other one, the display control unit 12 can determine that the operation state has changed not based on the operation by the occupant. Alternatively, when the lighting device automatically switches from off to on according to a change in illuminance detected by the illuminance sensor 1 in a state where the operation state of the auto-light function is the automatic-control-enabled state, the display control unit 12 may determine that the operation state has changed not based on the operation by the occupant.

[Display Control Program] The display control program causes the ECU 10 (computer, processor) to function (operate) as the function control unit 11 and the display control unit 12 described above. The display control program may be provided, for example, by a non-transitory recording medium such as a ROM or a semiconductor memory. The display control program may be provided via communication such as a network.

As described above, in the display control apparatus 100, the control method for a display control apparatus, and the display control program, when the operation state of the function changes not based on the operation by the occupant, the display operation unit 21 is controlled to display the function operation screens 40 and 50 for changing the operation state of the function by the operation by the occupant. This eliminates an operation on the display operation unit 21 to call up the function operation screens 40 and 50 in order for the occupant to change the operation state of the function to a desired state. Therefore, for example, even if the operation state that has automatically changed not based on the operation by the occupant is not a state in accordance with an intention of the occupant, the occupant can quickly and easily perform an operation to change the operation state of the function.

The display control unit 12 controls the display operation unit 21 to display the function operation screen including the operation image for changing the operation state of the function by the operation by the occupant when the operation state of the function changes not based on the operation by the occupant while the vehicle is traveling. For example, the function operation screen including the operation image may be the function operation screen 40 including the manual headlight operation image 41 and the manual position light operation image 43. As a result, when the operation state of the function automatically changes not based on the operation by the occupant while the vehicle is traveling, the occupant can quickly and easily operate the manual headlight operation image 41 and the manual position light operation image 43. The function operation screen including the operation image may be the function operation screen 50 including the manual wiper stop operation image 51, the manual low-speed wiper operation image 53, and the manual high-speed wiper operation image 54.

The predetermined function is the auto-light function for turning on or turning off the lighting device including the headlight of the vehicle. The operation state of the auto-light function includes the automatic-control-enabled state in which turning on or turning off of the lighting device is automatically changed according to the detection result of the illuminance sensor 1 mounted on the vehicle, the automatic-control-disabled state in which turning on or turning off of the lighting device is not automatically changed according to the detection result of the illuminance sensor 1 when there is an abnormality in the illuminance sensor 1, and the manual state in which turning on or turning off of the lighting device is changed by the operation by the occupant. The function control unit 11 switches the operation state of the auto-light function from the automatic-control-enabled state to the automatic-control-disabled state when the abnormality occurs in the illuminance sensor 1. The display control unit 12 controls the display operation unit 21 to display the function operation screen 40 for switching the operation state of the auto-light function to the manual state when the operation state of the auto-light function switches from the automatic-control-enabled state to the automatic-control-disabled state. As a result, even if the abnormality occurs in the illuminance sensor 1 and the operation state of the auto-light function is automatically switched from the automatic-control-enabled state to the automatic-control-disabled state, the occupant can quickly and easily perform an operation to switch the operation state of the auto-light function to the manual state.

The display control unit 12 is configured to display, on the display operation unit 21, the plurality of function operation screens 40 and 50 corresponding to the plurality of predetermined functions of the vehicle respectively, and the function selection screen 30 including the function link images 31 and 32 for transitioning to each of the plurality of function operation screens 40 and 50, the function selection screen 30 being provided at a hierarchical level higher than the plurality of function operation screens 40 and 50. The display control unit 12 controls the display operation unit 21 to display one of the function operation screens 40 and 50 corresponding to the function when the operation state of the function changes not based on the operation by the occupant. As a result, for example, even if the function selection screen 30 is displayed on the display operation unit 21 immediately before the operation state of the function automatically changes not based on the operation by the occupant, automatic transition to the function operation screens 40 and 50 of the function is enabled without performing a touch operation on the function link images 31 and 32 in the function selection screen 30.

Although the examples of the present disclosure have been described above, the present disclosure is not limited to the above-described examples.

In the above-described example, the number of predetermined functions is two or more, but the number of predetermined functions may be one.

In the above-described example, one function operation screen corresponds to one predetermined function, but the present disclosure is not limited to this example. One function operation screen may correspond to a plurality of predetermined functions.

In the above-described example, in steps S13 and S14 of FIG. 5, the function control unit 11 diagnoses and determines whether there is an abnormality in the sensor mounted on the vehicle, but the present disclosure is not limited to this example. For example, in steps S13 and S14 of FIG. 5, regarding the auto-high beam function, the function control unit 11 may determine whether the captured image of the camera 2 is unclear and the situation in front of the vehicle is unable to be recognized.

In the above-described example, as shown in FIG. 5, the change in the operation state of the function is a change from one of the automatic-control-enabled state, the manual state, and the automatic-control-disabled state to any other one, but the present disclosure is not limited to this example. One of the automatic-control-enabled state, the manual state, and the automatic-control-disabled state may be omitted, and the change may be between the remaining two. For example, the change in the operation state of the function may be a change between the automatic-control-enabled state and the manual state, omitting the automatic-control-disabled state. In this case, steps S13, S14, and S16 of FIG. 5 may be omitted. Alternatively, the change in the operation state of the function may be a change between the automatic-control-enabled state and the automatic-control-disabled state, omitting the manual state. In this case, steps S11 and S12 of FIG. 5 may be omitted.

In the above-described example, the function operation screen includes the operation image, but may not include the operation image. For example, in the function operation screen 40, instead of the software switch as the operation image such as the manual headlight operation image 41 and the manual position light operation image 43, the same function as the manual headlight operation image 41 and the manual position light operation image 43 may be performed by voice recognition of a voice of the occupant. In this case, for example, the voice of the occupant such as "Please turn on the headlight" acquired by a microphone may be input to the ECU 10, and the ECU 10 may perform voice recognition to switch the operation state of the auto-light function to the manual state and turn on the headlight. Operations other than touch operation and voice recognition may be used. In short, the function operation screen may be displayed on the display operation unit 21 when the operation state of the function changes not based on the operation by the occupant.

Hereinafter, configurations of various aspects of the present disclosure will be described.
[1] A display control apparatus comprising:
   a display operation unit mounted on a vehicle and configured to display information to an occupant of the vehicle and receive an operation by the occupant;
   a function control unit configured to control a predetermined function of the vehicle based on a detection result of a sensor mounted on the vehicle or the operation by the occupant; and
   a display control unit configured to control the display operation unit based on an operation state of the function,
   wherein the display control unit controls the display operation unit to display a function operation screen for changing the operation state of the function by the operation by the occupant when the operation state of the function changes not based on the operation by the occupant.
[2] The display control apparatus according to [1],
   wherein the display control unit controls the display operation unit to display the function operation screen including an operation image for changing the operation state of the function by the operation by the occupant when the operation state of the function changes not based on the operation by the occupant while the vehicle is traveling.
[3] The display control apparatus according to [1] or [2],
   wherein the function is lighting control for turning on or turning off a lighting device including a headlight of the vehicle,
   wherein the operation state includes
      an automatic-control-enabled state in which turning on or turning off of the lighting device is automatically changed according to a detection result of an illuminance sensor mounted on the vehicle,
      an automatic-control-disabled state in which turning on or turning off of the lighting device is not automatically changed according to the detection result of the illuminance sensor when there is an abnormality in the illuminance sensor, and
      a manual state in which turning on or turning off of the lighting device is changed by the operation by the occupant,
   wherein the function control unit switches the operation state of the lighting control from the automatic-control-enabled state to the automatic-control-disabled state when the abnormality occurs in the illuminance sensor, and
   wherein the display control unit controls the display operation unit to display the function operation screen for switching the operation state of the lighting control to the manual state when the operation state of the lighting control switches from the automatic-control-enabled state to the automatic-control-disabled state.
[4] The display control apparatus according to any one of [1] to [3],
   wherein the display control unit is configured to display, on the display operation unit,
      a plurality of the function operation screens corresponding to a plurality of the functions of the vehicle respectively, and
      a function selection screen including a link for transitioning to each of the plurality of the function operation screens, the function selection screen being provided at a hierarchical level higher than the plurality of the function operation screens, and
   wherein the display control unit controls the display operation unit to display the function operation screen corresponding to the function when the operation state of the function changes not based on the operation by the occupant.
[5] A method for controlling a display control apparatus controlling a display operation unit mounted on a vehicle, displaying information to an occupant of the vehicle, and receiving an operation by the occupant, the method comprising:
   a function control step of causing the display control apparatus to control a predetermined function of the vehicle based on a detection result of a sensor mounted on the vehicle or the operation by the occupant; and
   a display control step of causing the display control apparatus to control the display operation unit based on an operation state of the function,
   wherein, in the display control step, the display operation unit is controlled to display a function operation screen for changing the operation state of the function by the operation by the occupant when the operation state of the function changes not based on the operation by the occupant in the function control step.
[6] A display control program causing a computer to function as a display control apparatus controlling a display operation unit that is mounted on a vehicle, the display operation unit being configured to display information to an occupant of the vehicle and receive an operation by the occupant, the display control program causing the computer to function as:
   a function control unit configured to control a predetermined function of the vehicle based on a detection result of a sensor mounted on the vehicle or the operation by the occupant; and
   a display control unit configured to control the display operation unit based on an operation state of the function,
   wherein the display control unit controls the display operation unit to display a function operation screen for changing the operation state of the function by the operation by the occupant when the operation state of the function changes not based on the operation by the occupant.

## Claims

1. A display control apparatus (100) comprising:
a display operation unit (21) mounted on a vehicle and configured to display information to an occupant of the vehicle and receive an operation by the occupant;
a function control unit (11) configured to control a predetermined function of the vehicle based on a detection result of a sensor (1, 2, 3, 4) mounted on the vehicle or the operation by the occupant; and
a display control unit (12) configured to control the display operation unit (21) based on an operation state of the function,
wherein the display control unit (12) controls the display operation unit (21) to display a function operation screen (40, 50) for changing the operation state of the function by the operation by the occupant when the operation state of the function changes not based on the operation by the occupant.

2. The display control apparatus (100) according to claim 1,
wherein the display control unit (12) controls the display operation unit (21) to display the function operation screen (40, 50) including an operation image (41, 43, 51, 53, 54) for changing the operation state of the function by the operation by the occupant when the operation state of the function changes not based on the operation by the occupant while the vehicle is traveling.

3. The display control apparatus (100) according to claim 1 or 2,
wherein the function is lighting control for turning on or turning off a lighting device including a headlight of the vehicle,
wherein the operation state includes
an automatic-control-enabled state in which turning on or turning off of the lighting device is automatically changed according to a detection result of an illuminance sensor (1) mounted on the vehicle,
an automatic-control-disabled state in which turning on or turning off of the lighting device is not automatically changed according to the detection result of the illuminance sensor (1) when there is an abnormality in the illuminance sensor (1), and
a manual state in which turning on or turning off of the lighting device is changed by the operation by the occupant,
wherein the function control unit (11) switches the operation state of the lighting control from the automatic-control-enabled state to the automatic-control-disabled state when the abnormality occurs in the illuminance sensor (1), and
wherein the display control unit (12) controls the display operation unit (21) to display the function operation screen (40) for switching the operation state of the lighting control to the manual state when the operation state of the lighting control switches from the automatic-control-enabled state to the automatic-control-disabled state.

4. The display control apparatus (100) according to any one of claims 1 to 3,
wherein the display control unit (12) is configured to display, on the display operation unit (21),
a plurality of the function operation screens (40, 50) corresponding to a plurality of the functions of the vehicle respectively, and
a function selection screen (30) including a link (31, 32, 33) for transitioning to each of the plurality of the function operation screens (40, 50), the function selection screen (30) being provided at a hierarchical level higher than the plurality of the function operation screens (40, 50), and
wherein the display control unit (12) controls the display operation unit (21) to display the function operation screen (40, 50) corresponding to the function when the operation state of the function changes not based on the operation by the occupant.

5. A method for controlling a display control apparatus (100) controlling a display operation unit (21) mounted on a vehicle, displaying information to an occupant of the vehicle, and receiving an operation by the occupant, the method comprising:
a function control step of causing the display control apparatus (100) to control a predetermined function of the vehicle based on a detection result of a sensor (1, 2, 3, 4) mounted on the vehicle or the operation by the occupant; and
a display control step of causing the display control apparatus (100) to control the display operation unit (21) based on an operation state of the function,
wherein, in the display control step, the display operation unit (21) is controlled to display a function operation screen (40, 50) for changing the operation state of the function by the operation by the occupant when the operation state of the function changes not based on the operation by the occupant in the function control step.

6. A display control program causing a computer (10) to function as a display control apparatus (100) controlling a display operation unit (21) that is mounted on a vehicle, the display operation unit (21) being configured to display information to an occupant of the vehicle and receive an operation by the occupant, the display control program causing the computer (10) to function as:
a function control unit (11) configured to control a predetermined function of the vehicle based on a detection result of a sensor (1, 2, 3, 4) mounted on the vehicle or the operation by the occupant; and
a display control unit (12) configured to control the display operation unit (21) based on an operation state of the function,
wherein the display control unit (12) controls the display operation unit (21) to display a function operation screen (40, 50) for changing the operation state of the function by the operation by the occupant when the operation state of the function changes not based on the operation by the occupant.
